# EUROPEAN PATENT APPLICATION

(11) **EP 4 502 545 A1**
(43) Date of publication of application: **05.02.2025**
(21) Application number: 23781025.4
(22) Date of filing: 30.03.2023
(51) Int. Cl.: G01D 5/353, C09J 5/04, C09J 201/00, G01D 11/30

(54) **SENSOR PACKAGE, SENSOR PACKAGE ATTACHMENT METHOD, SET INCLUDING SENSOR PACKAGE AND CURING AGENT, AND BONDED STRUCTURE**

(30) Priority: 31.03.2022 JP 2022059637
(71) Applicant: NITTO DENKO CORPORATION, Ibaraki-shi Osaka 567-8680 (JP); IHI Inspection and Instrumentation Co., Ltd., Tokyo 140-0013 (JP)
(72) Inventor: TANAKA Akiko, Ibaraki-shi, Osaka 567-8680 (JP); HAMADA Chie, Ibaraki-shi, Osaka 567-8680 (JP); SUZUKI Yuto, Ibaraki-shi, Osaka 567-8680 (JP); WATANABE Masahiro, Ibaraki-shi, Osaka 567-8680 (JP); FUKUMOTO Shintaro, Yokohama-shi, Kanagawa 236-0004 (JP); NISHIDO Takayuki, Yokohama-shi, Kanagawa 236-0004 (JP)
(74) Representative: Müller-Boré & Partner Patentanwälte PartG mbB
(86) International application number: PCT/JP2023/013444
(87) International publication number: WO 2023/191017

(57) **Abstract**

Provided is a sensor package, a method for attaching the above sensor package, a set including the above sensor package and a curing agent, and a bonded structure, the sensor package including a first base material and an optical fiber having an FBG sensor portion disposed on the first base material, the sensor package including a resin portion located on the first base material, a first adhesive layer located on the first base material and used for attaching the first base material to an object, and a bonding adhesive layer located on a surface of the resin portion on a side opposite to the first base material, and the FBG sensor portion on the optical fiber being in contact with the resin portion and held by the bonding adhesive layer.

## Description

### TECHNICAL FIELD

The present invention relates to a sensor package, a method for attaching the sensor package, a set including the sensor package and a curing agent, and a bonded structure including the sensor package.

### BACKGROUND ART

In the related art, a sensor installed in an object to measure a physical change such as vibration and distortion of the object and various kinds of information is used.

For example, Patent Literature 1 discloses a sensor package including a first base material, an FBG sensor, a resin portion and a first adhesive layer located on the first base material, and a bonding adhesive layer located on a surface of the resin portion on a side opposite to the first base material, the FBG sensor being held by the resin portion, and describes that the sensor package is excellent in workability when attached to an object without greatly reducing sensitivity of the sensor.

### CITATION LIST

### PATENT LITERATURE

Patent Literature 1: WO2021/054350

### SUMMARY OF INVENTION

### TECHNICAL PROBLEM

However, it has been found that a sensor package in the related art still has room for further improvement in detection accuracy of the FBG sensor.

In the sensor package having a structure specifically shown in Patent Literature 1, the FBG sensor detects information on the object through the resin portion and the bonding adhesive layer. Here, a resin used in the resin portion in Patent Literature 1 includes a resin having an elastic modulus of a predetermined value or more, and stress relaxation occurs therein due to cure shrinkage or aging. Such a change in the resin portion affects the FBG sensor, and a wavelength shift of a peak wavelength in a wavelength spectrum measured by an interrogator occurs before and after manufacture of the sensor package and due to aging after the manufacture. This means that an initial value of a detection system using the FBG sensor varies.

In view of the above, an object of the present invention is to provide a sensor package capable of sensing with high accuracy and excellent in workability at the time of attachment. In addition, a problem of the present invention is to provide a sensor package that is applicable to outdoor use and has high durability.

### SOLUTION TO PROBLEM

As a result of intensive studies, the present inventors have found that the above problem can be solved by providing, in a sensor package in which an adhesive layer, a resin portion, and a bonding adhesive layer provided on a surface of the resin portion on a side opposite to a base material are provided on the base material, an FBG sensor portion in contact with the resin portion and held by the bonding adhesive layer.

In order to solve the problem described above and achieve the object, the present invention has the following configurations of [1] to [17].
[1] A sensor package attached to an object, the sensor package including:
   a first base material; and
   an optical fiber having an FBG sensor portion disposed on the first base material, in which
   the sensor package includes
   a resin portion located on the first base material,
   a first adhesive layer located on the first base material and used for attaching the first base material to the object, and
   a bonding adhesive layer located on a surface of the resin portion on a side opposite to the first base material, and
   the FBG sensor portion of the optical fiber is in contact with the resin portion and held by the bonding adhesive layer.
[2] The sensor package according to [1], in which
   the resin portion has adhesiveness.
[3] The sensor package according to [1], in which
   an elastic modulus of the resin portion is less than 1.0 × 10⁷ Pa.
[4] The sensor package according to [1], in which
   the bonding adhesive layer is cured at room temperature.
[5] The sensor package according to [1], in which
   the bonding adhesive layer is cured by a curing agent.
[6] The sensor package according to [1], in which
   at least a part of an entire periphery of the resin portion excluding a surface on a side of the bonding adhesive layer is covered with the first adhesive layer.
[7] The sensor package according to [1], in which
   the first adhesive layer has an opening penetrating in a thickness direction, and
   the resin portion is provided in the opening.
[8] The sensor package according to [1], in which
   surfaces of the first adhesive layer and the bonding adhesive layer on sides to be attached to the object are protected by a first release liner.
[9] The sensor package according to [1], in which
   the first base material is transparent or translucent.
[10] The sensor package according to [1], further including:
   a second adhesive layer and a second base material in this order on a surface of the first base material on a side opposite to a surface on a side of the first adhesive layer.
[11] The sensor package according to [10], in which
   the second base material is a weather resistant base material.
[12] The sensor package according to [10], further including:
   a second release liner in a portion between the first base material and the second adhesive layer.
[13] A method for attaching the sensor package according to any of [1] to [12],
   a bonding adhesive layer in the sensor package being cured by a curing agent, the method for attaching the sensor package including:
   a step of applying the curing agent to at least one of the bonding adhesive layer and an object; and
   a step of attaching the sensor package to the object via the bonding adhesive layer.
[14] A method for attaching the sensor package according to any of [1] to [12],
   a bonding adhesive layer in the sensor package being cured by a curing agent, the method for attaching the sensor package including:
   a step of applying the curing agent to the bonding adhesive layer;
   a step of applying the curing agent to an object; and
   a step of attaching the sensor package to the object such that the curing agent applied to the bonding adhesive layer and the curing agent applied to the object are in contact with each other.
[15] A method for attaching the sensor package according to any of [1] to [5] to an object, in which
   in the sensor package, surfaces of a first adhesive layer and a bonding adhesive layer on sides to be attached to the object are protected by a first release liner,
   the sensor package includes a first base material, a second adhesive layer, and a second base material in this order on a surface on a side opposite to the surface of the first adhesive layer on the side to be attached to the object, and
   the sensor package includes a second release liner in a portion between the first base material and the second adhesive layer, the method for attaching the sensor package including:
      a step of peeling off the first release liner and applying a curing agent to the bonding adhesive layer;
      a step of attaching a release surface of the sensor package from which the first release liner is peeled off to the object; and
      a step of peeling off the second release liner and attaching a release surface of the second adhesive layer from which the second release liner is peeled off to the first base material.
[16] A set including:
   the sensor package according to any of [1] to [12] and a curing agent.
[17] A bonded structure in which a sensor package and an object are bonded to each other via a cured layer, the sensor package including a first base material and an optical fiber having an FBG sensor portion disposed on the first base material, the bonded structure including:
   a resin portion located on the first base material;
   a first adhesive layer located on the first base material; and
   the cured layer located on a surface of the resin portion on a side opposite to the first base material, in which
   the first base material is attached to the object via the first adhesive layer, and
   the FBG sensor portion of the optical fiber is in contact with the resin portion and held by the cured layer.

### ADVANTAGEOUS EFFECTS OF INVENTION

The sensor package according to one aspect of the present invention capable of sensing with high accuracy, can be easily attached and positioned, and is excellent in workability. In addition, the sensor package has high durability and is applicable to outdoor use.

### BRIEF DESCRIPTION OF DRAWINGS

[FIG. 1] FIG. 1 is a schematic view of a configuration example of a sensor package.
[FIG. 2] FIG. 2 is a schematic cross-sectional view taken along a line I-I in FIG. 1.
[FIG. 3] FIG. 3 is a schematic cross-sectional view taken along a line II-II in FIG. 1.
[FIG. 4] FIG. 4 is a schematic cross-sectional view taken along a line III-III in FIG. 1.
[FIG. 5] FIG. 5 is a schematic cross-sectional view of a configuration example of the sensor package.
[FIG. 6] FIG. 6 is a schematic cross-sectional view of a configuration example of the sensor package.
[FIG. 7] FIG. 7 is a schematic cross-sectional view of a configuration example of the sensor package.
[FIG. 8] (a) and (b) of FIG. 8 are schematic cross-sectional views of configuration examples of the sensor package.
[FIG. 9] FIG. 9 is a schematic cross-sectional view of a configuration example of the sensor package.
[FIG. 10] FIG. 10 is a schematic cross-sectional view of a configuration example of a bonded structure.

### DESCRIPTION OF EMBODIMENTS

Hereinafter, embodiments of the present invention will be described in detail.

In the present description, "A to B" indicating a range means "A or more and B or less". In addition, in the present description, the term "weight" has the same meaning as the term "mass", the term "weight%" has the same meaning as the term "mass%", and the term "part by weight" has the same meaning as the term "part by mass".

In the present description, the term "adhesive" refers to an adhesive that exhibits peeling resistance without being solidified. Specifically, the adhesive is also referred to as a pressure-sensitive adhesive, and refers to a material that exhibits a state of a soft solid (elastic body) in a temperature range around room temperature and has a property of more easily adhering to an adherend under pressure. As defined in "C.A.Dahlquist, 'Adhesion: Fundamentals and Practice', McLaren & Sons, (1966) P.143", the adhesive referred to herein may generally be a material having a property of satisfying complex tensile elastic modulus E* (1 Hz) < 10⁷ dyne/cm² (typically, a material having the above property at 25°C). In addition, the term "adhesive layer" refers to a layer formed of the adhesive. Further, the term "adhesiveness" refers to the above property of the adhesive.

In the present description, the term "bonding adhesive" refers to a material that has a function of the above adhesive and increases peeling resistance when cured. In addition, the term "bonding adhesive layer" refers to a layer formed of the bonding adhesive.

In the following drawings, the same reference numerals may be given to members and portions having the same functions, and redundant description may be omitted or simplified. In addition, embodiments described in the drawings are schematically illustrated to clearly describe the present invention, and sizes and scales of actual products are not necessarily accurately expressed.

### [Sensor Package]

The sensor package according to an embodiment of the present invention is a sensor package attached to an object, the sensor package including: a first base material; and an optical fiber having an FBG sensor portion disposed on the first base material, in which
the sensor package includes
a resin portion located on the first base material,
a first adhesive layer located on the first base material and used for attaching the first base material to the object, and
a bonding adhesive layer located on a surface of the resin portion on a side opposite to the first base material, and
the FBG sensor portion of the optical fiber is in contact with the resin portion and held by the bonding adhesive layer.

In the sensor package according to the embodiment of the present invention, the FBG sensor portion is held by the bonding adhesive layer and is attached to the object via the bonding adhesive layer. That is, since the FBG sensor portion can detect information on the object through only the bonding adhesive layer without through the first adhesive layer or the resin portion, accuracy of sensing can be improved.

As will be described later, the FBG sensor portion and the object can be more firmly bonded to each other by curing the bonding adhesive layer, and detection accuracy can be further improved.

### (First Embodiment)

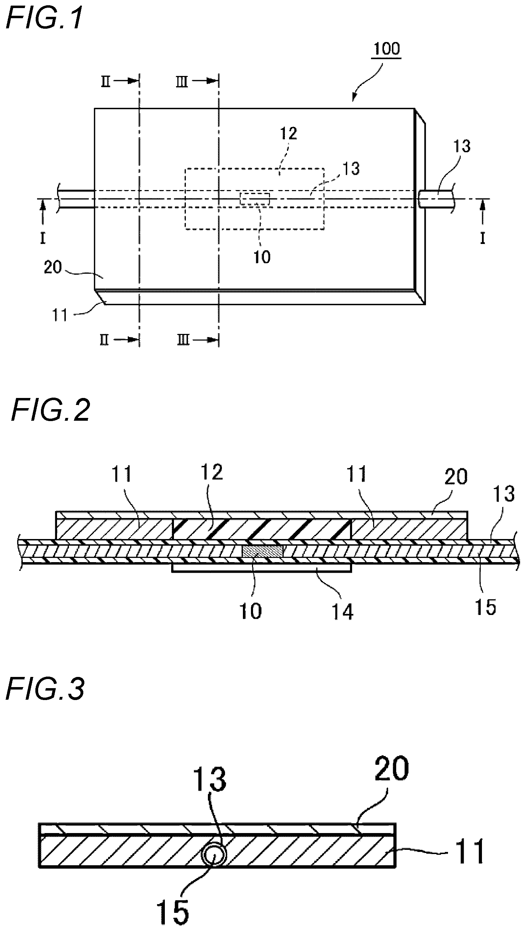

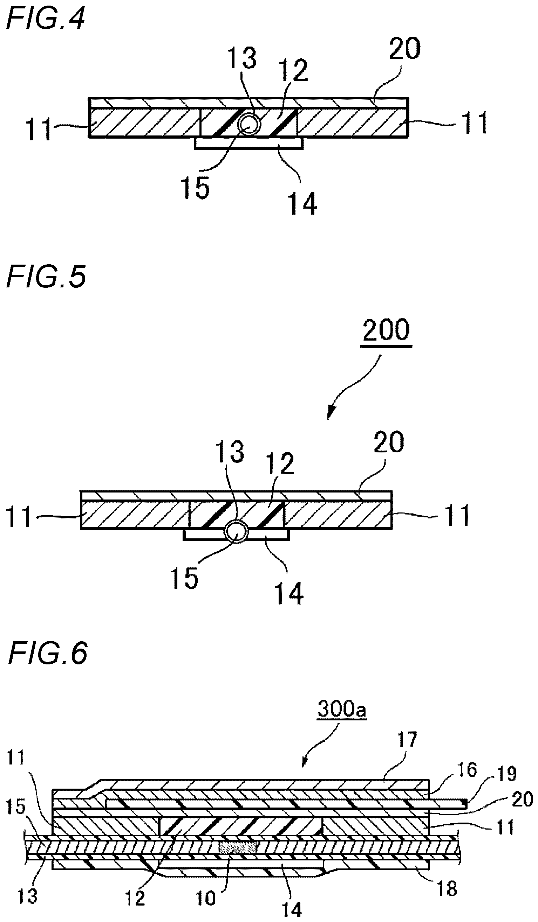

FIG. 1 is a schematic view of a configuration example of a sensor package 100 according to a first embodiment of the present invention. FIG. 2 is a schematic cross-sectional view taken along a line I-I in FIG. 1. FIG. 3 is a schematic cross-sectional view taken along a line II-II in FIG. 1. FIG. 4 is a schematic cross-sectional view taken along a line III-III in FIG. 1.

The sensor package 100 shown in FIGS. 1 to 4 includes a first base material 20, an optical fiber 15 having a fiber bragg grating (FBG) sensor unit 10 disposed on the first base material, a resin portion 12 located on the first base material 20, a first adhesive layer 11 located on the first base material 20 and used for attaching the first base material to an object, and a bonding adhesive layer 14 located on a surface of the resin portion 12 on a side opposite to the first base material 20, in which the FBG sensor portion 10 is in contact with the resin portion 12 and held by the bonding adhesive layer 14.

In the sensor package 100, the FBG sensor portion 10 is in contact with the resin portion and held by the bonding adhesive layer 14, and the FBG sensor portion 10 is not completely embedded in the resin portion, so that an influence due to cure shrinkage of the resin portion 12 is small, and an influence on detection accuracy using a FBG sensor is also small. In addition, the FBG sensor portion 10 is held by the bonding adhesive layer 14, so that even when a module is to be installed on the object, the FBG sensor portion and the object can be more firmly bonded to each other by curing the bonding adhesive layer, and the detection accuracy can be further improved.

In the sensor package 100, at least a part of an entire periphery of the resin portion 12 in contact with the FBG sensor portion 10 excluding a surface on a bonding adhesive layer side may be covered with the first adhesive layer 11. In the sensor package 100 shown in FIGS. 1 to 4, a surface on a side on which the bonding adhesive layer 14 is provided is a surface on a side to be attached to the object.

The FBG sensor portion 10 is formed by engraving a periodic diffraction grating on a core of the optical fiber 15, and a detection signal of the FBG sensor portion 10 is output to an outside of the sensor package 100.

The optical fiber 15 may be covered with a covering material 13.

In a case where the optical fiber 15 is covered with the covering material 13, from the viewpoint of preventing a signal from the object from being relaxed by the covering material and improving the detection accuracy of the FBG sensor, it is preferable to use a material having a high elastic modulus for the covering material 13. Specific materials will be described later.

The covering material 13 may be a single layer or a plurality of layers. In a case where the covering material 13 is of a plurality of layers, for example, a covering layer having a high elastic modulus may be provided, and another covering layer may be further provided on an outer side thereof. Since durability is improved by providing the another covering layer, the covering material 13 can also be suitably used outdoors.

However, from the viewpoint of improving the detection accuracy of the FBG sensor, it is preferable to use only the covering layer of a high elastic modulus material or not to provide the covering material 13 in a portion where the optical fiber 15 is in contact with the bonding adhesive layer 14.

An outer diameter of the optical fiber is preferably 0.125 mm to 1 mm.

A thickness of the covering material 13 that covers the optical fiber 15 is not particularly limited, and is usually 10 µm to 1 mm.

For example, the optical fiber having the outer diameter of 0.125 mm to 1 mm may be covered with a resin covering material, and an outer diameter of the covering material including the optical fiber may be preferably 0.145 mm to 3 mm.

However, from the viewpoint of improving the detection accuracy of the FBG sensor, the thickness of the covering material 13 is preferably 0.5 mm or less, more preferably 0.2 mm or less, and further preferably 0.05 mm or less in the portion in contact with the bonding adhesive layer 14.

The first adhesive layer 11 is provided on the first base material. By providing the first adhesive layer 11, when the sensor package is installed on the object, the sensor package can be temporarily fixed by the first adhesive layer 11 and firmly bonded by curing the bonding adhesive layer, and is excellent in workability. In addition, since a gap between the sensor package 100 and the object can be eliminated by the first adhesive layer 11 and outside air or moisture can be prevented from entering into the FBG sensor portion 10, a sensor package having excellent durability can be obtained.

It is preferable that the first adhesive layer covers at least a part of the entire periphery of the resin portion excluding the surface on a side to be attached to the object. This is because, in a case where the FBG sensor detects information from the object, when an adhesive layer is present between the FBG sensor and the object, obtained deformation is relaxed by the adhesive layer, so that sensitivity of the detection is greatly reduced.

The first adhesive layer 11 may be formed of a plurality of adhesive layers.

In a case where the covering material 13 is provided on the optical fiber 15, the first adhesive layer 11 can also be provided with a notch at a position corresponding to the covering material 13 depending on a thickness of the covering material 13. By providing the notch, the sensor package can be attached to the object with almost no gap between the first adhesive layer 11 and the object, outside air or moisture is prevented from entering into the FBG sensor portion 10, and excellent durability is obtained.

In a case where a maximum diameter of the covering material 13 (outer diameter of covering material 13 including optical fiber 15) is smaller than a thickness of the first adhesive layer 11, there is no need to provide a notch in the first adhesive layer 11, and the covering material 13 is buried in the first adhesive layer 11, so that outside air or moisture can be prevented from entering therein and excellent durability is obtained.

In the case where the covering material 13 is provided on the optical fiber 15, the thickness of the first adhesive layer 11 is preferably equal to or larger than the maximum diameter (outer diameter) of the covering material 13.

The first adhesive layer 11 may have an opening penetrating in a thickness direction (hereinafter, may be simply referred to as an opening).

In a case where the resin portion 12 is provided in the opening and the FBG sensor portion 10 is disposed so as to be in contact with the resin portion 12 and to be held by the bonding adhesive layer 14, the FBG sensor and the first adhesive layer do not come into contact with each other, and accurate information on the object is more easily obtained.

That is, it is preferable that the first adhesive layer 11 has an opening penetrating in the thickness direction, and the resin portion 12 is provided in the opening.

The expression that the FBG sensor portion 10 is held by the bonding adhesive layer 14 means that the FBG sensor portion 10 in contact with the bonding adhesive layer 14 is fixed to the bonding adhesive layer 14 by adhesiveness of the bonding adhesive layer 14.

Further, by disposing the FBG sensor in the opening, a position of the FBG sensor can be visually confirmed, and positioning at the time of performing attachment work is facilitated.

A shape of the opening is not particularly limited, and may be any of a circular shape, an elliptical shape, a polygonal shape, a square shape, and a rectangular shape.

The resin portion 12 is located on the first base material and is in contact with the FBG sensor portion 10.

At least the part of the entire periphery of the resin portion 12 excluding the surface on a side to be attached to the object may be covered with the first adhesive layer 11.

In a case where the first adhesive layer 11 has the opening penetrating in the thickness direction, the resin portion 12 is provided in the opening.

In order to increase the sensitivity of detection by the FBG sensor portion 10, it is preferable that the resin portion 12 is formed such that a surface of the resin portion 12 on a side opposite to the first base material and a surface (attachment surface) of the first adhesive layer 11 on a side opposite to the first base material are flush with each other.

The resin portion 12 and the first adhesive layer 11 are positioned on the first base material 20, and the sensor package 100 includes the bonding adhesive layer 14 positioned on the surface of the resin portion 12 on a side opposite to the first base material 20.

The FBG sensor portion 10 is preferably protected by the resin portion 12 and the bonding adhesive layer 14 so as not to be exposed to the outside air.

As shown in FIGS. 1 to 4, the bonding adhesive layer 14 can be installed such that when the sensor package 100 is to be attached to the object, the sensor package 100 is attached to the object via the bonding adhesive layer 14. The FBG sensor portion 10 held by the bonding adhesive layer 14 is attached to the object via the bonding adhesive layer 14. That is, the FBG sensor portion 10 detects the information on the object through the bonding adhesive layer 14 without through the first adhesive layer 11 and the resin portion 12, thereby improving the detection accuracy.

### (Second Embodiment)

In a second embodiment, a similar member as that in the above embodiment is denoted by the same reference sign, and a detailed description thereof is omitted.

FIG. 5 is a schematic cross-sectional view of a sensor package 200 according to the second embodiment of the present invention, and is a cross-sectional view corresponding to the cross-sectional view shown in FIG. 4 in the sensor package 100.

The sensor package 200 shown in FIG. 5 is a modification of the sensor package 100 shown in FIG. 1, and shows an embodiment in which a position of the FBG sensor portion 10 is positioned closer to a bonding adhesive layer 14 side while being in contact with the resin portion 12 and held by the bonding adhesive layer 14.

Specifically, in the above sensor package 100, the FBG sensor portion 10 is disposed in the above opening of the first adhesive layer, whereas in the sensor package 200, the FBG sensor portion 10 is disposed on the opening at a position protruding to a region on a side opposite to a first base material side of the opening.

The FBG sensor portion 10 may be protected by the resin portion 12 and the bonding adhesive layer 14, or a part thereof may protrude from the bonding adhesive layer 14 and be exposed as shown in FIG. 5. In the latter case, the sensor package is preferably protected by a first release liner to be described later until the sensor package is attached to the object.

In the sensor package 200, it is preferable that the FBG sensor portion 10 is disposed at a position closer to the object because the information on the object can be detected more accurately.

### (Third Embodiment)

In a third embodiment, a similar member as that in the above embodiment is denoted by the same reference sign, and a detailed description thereof is omitted.

FIG. 6 is a schematic cross-sectional view of a configuration example of a sensor package according to the third embodiment of the present invention, and is a cross-sectional view corresponding to the cross-sectional view shown in FIG. 2 in the sensor package 100.

As shown in FIG. 6, in a sensor package 300a, the surfaces of the first adhesive layer 11 and the bonding adhesive layer 14 on sides to be attached to the object may be protected by the first release liner.

As shown in FIG. 6, the sensor package 300a may include a second adhesive layer 16 and a second base material 17 in this order on a surface of the first base material 20 on a side opposite to the surface on the first adhesive layer 11 side.

The sensor package 300a may include a second release liner 19 in a portion between the first base material 20 and the second adhesive layer 16. By providing the second release liner 19 in the portion between the first base material 20 and the second adhesive layer 16, the second base material 17 can be laminated on the first base material 20 at any timing. When the second release liner 19 is peeled off and the second base material 17 is laminated on the first base material 20 after the sensor package 300a is attached to the object, the FBG sensor portion 10 can be easily viewed at the time of the attachment, positioning is facilitated, and excellent workability is obtained.

The second release liner 19 may be provided with a back split portion. The back split portion is formed by making a cutting line on a surface of the second release liner 19 on a side opposite to a contact surface with the adhesive layer.

A shape of the cutting line may be linear, curved, for example, wavy, or a combination thereof. In addition, the cutting line may be a solid line, a broken line, or a combination thereof. By providing the back split portion in the second release liner 19, the second release liner 19 can be easily removed.

In addition, the sensor package 300a may include the second release liner 19 in the portion between the first base material 20 and the second adhesive layer 16, and the second release liner 19 may include an extension portion that extends beyond the second adhesive layer 16 in a surface spreading direction of the second release liner 19 and is exposed. When the second release liner 19 includes the extension portion, the extension portion serves as a grip portion, and a sensor package having excellent workability can be obtained.

A shape of the extension portion is not particularly limited, and any appropriate shape may be adopted depending on a purpose. Specific examples of a visual shape of the above extension portion include a quadrangle shape (also including trapezoid) and a semi-elliptical shape. In addition, an end portion of the above extension portion may be a waveform or the like.

A length of the above extension portion in a releasing direction is preferably 1 mm to 30 mm, and further preferably 5 mm to 20 mm. When the length of the above extension portion in the releasing direction falls within such a range, a sensor package having excellent releasing operability and good workability can be obtained.

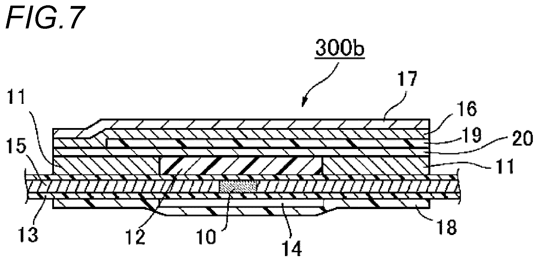

As the sensor package according to the third embodiment of the present invention, an aspect in which the extension portion of the second release liner 19 in the sensor package 300a is not provided may be adopted, as in a sensor package 300b shown in FIG. 7. That is, the second release liner 19 may be provided in the portion between the first base material 20 and the second adhesive layer 16. The second release liner 19 is not provided with the extension portion.

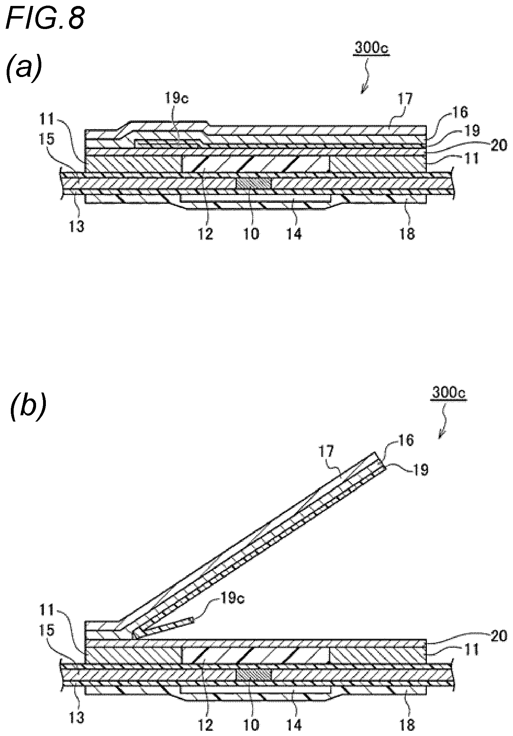

In the sensor package according to the third embodiment of the present invention, an aspect in which a tab 19c is provided by folding a part of a tip of the second release liner 19 on an inner side of the sensor package toward a first base material 20 side may be adopted, as in a sensor package 300c shown in (a) and (b) of FIG. 8. According to this embodiment, as shown in (b) of FIG. 8, when the second release liner 19 is lifted up in the releasing direction, the tab 19c is lifted up, so that the tab 19c serves as a grip portion and the second release liner 19 can be easily peeled off from the second adhesive layer 16. In the sensor package 300c illustrated in (a) and (b) of FIG. 8, the extension portion illustrated in FIG. 6 is not provided in the second release liner, but the extension portion may also be provided in the present aspect.

Next, a method for manufacturing the sensor package according to the embodiment of the present invention will be described.

### [Method for Manufacturing Sensor Package]

The method for manufacturing the sensor package according to the embodiment of the present invention includes:
(I) a step of providing the first adhesive layer 11 on the first base material 20;
(II) a step of providing the resin portion 12 on the first base material 20;
(III) a step of providing the optical fiber 15 such that the FBG sensor portion 10 is disposed on the first base material 20; and
(IV) a step of providing the bonding adhesive layer 14 on the surface of the resin portion 12 on a side opposite to the first base material 20.

The above steps (I) to (IV) are performed such that in the obtained sensor package, the FBG sensor portion 10 is in contact with the resin portion 12 and held by the bonding adhesive layer 14.

### <Step (I)>

In the step of providing the first adhesive layer 11, the first adhesive layer 11 may be directly formed on the first base material by applying and curing an adhesive composition, or an adhesive layer formed in advance may be attached thereon. In a case where the first adhesive layer 11 is formed of a plurality of adhesive layers, the step of providing the first adhesive layer 11 may be performed in a plurality of times.

In a case where the optical fiber 15 with the FBG sensor portion 10 is covered with the covering material 13, the first adhesive layer 11 may be provided with a notch at a position corresponding to the covering material 13.

### <Step (II)>

In a case where the first adhesive layer 11 has an opening, the resin portion 12 can be provided by filling the opening with a resin composition for forming the resin portion 12 and curing the resin composition, or by disposing an adhesive such as an adhesive sheet in the opening.

### <Step (III)>

In the case where the first adhesive layer 11 has an opening, as shown in FIG. 4 or FIG. 5, the FBG sensor portion 10 can be disposed in the opening of the first adhesive layer 11 or on the opening at a position protruding into a region on a side opposite to the first base material side of the opening.

In the case where the first adhesive layer 11 has an opening, as shown in FIG. 4 or 5, the FBG sensor portion 10 can be disposed so as to be in contact with the resin portion 12 provided in the opening of the first adhesive layer 11.

The method for manufacturing a sensor package may include the above steps (I) to (III) in this order, and the order may be changed.

For example, the resin portion 12 made of the adhesive sheet and the FBG sensor portion 10 may be placed on the first base material 20 in this order in advance, and at least the part of the entire periphery of the resin portion 12 excluding the surface on a side to be attached to the object may be covered with the first adhesive layer 11.

In addition, for example, after the first adhesive layer 11 is provided on the first base material 20, the FBG sensor portion 10 is installed, and then the resin portion may be provided by filling and curing the resin composition.

The step of providing the first adhesive layer 11, the step of providing the resin portion 12, and the step of providing the optical fiber 15 with the FBG sensor portion 10 on the first base material 20 may be performed simultaneously.

For example, the FBG sensor portion 10 is placed on any release film 30, and further, the first adhesive layer 11 is disposed such that the opening is located in the FBG sensor portion 10, and the resin portion 12 is formed in the opening of the first adhesive layer 11.

Next, the first base material 20 is laminated on a side of the first adhesive layer 11 on a side opposite to a release film 30 side, and the release film 30 is peeled off, whereby the first adhesive layer 11, the resin portion 12, and the FBG sensor portion 10 in contact with the resin portion 12 can be simultaneously provided on the first base material 20.

### <Step (IV)>

The bonding adhesive layer 14 can be provided on the surface of the resin portion 12 on a side opposite to the first base material 20. The bonding adhesive layer 14 may be directly formed by applying and curing an adhesive bonding composition, or a bonding adhesive layer 14 formed in advance may be attached to the resin portion 12.

The step of providing the bonding adhesive layer 14 can be performed after the FBG sensor portion 10 is disposed so as to be in contact with the resin portion 12, may be performed after the resin portion 12 is disposed on the first base material 20, or may be performed before the resin portion 12 is disposed on the first base material 20.

The method for manufacturing a sensor package may include steps other than the above steps (I) to (IV).

For example, a step of attaching the first release liner 18 to the surfaces of the first adhesive layer and the bonding adhesive layer on sides to be attached to the object may be included.

In addition, a step of providing the second adhesive layer 16 and the second base material 17 on the surface of the first base material 20 on a side opposite to the surface on the first adhesive layer 11 side may be included.

Further, a step of providing the second release liner 19 in a portion between the first base material 20 and the second adhesive layer 16 may be included.

The second release liner 19 can be laminated on a part of the surface of the first base material 20 on a side opposite to the surface on the first adhesive layer 11 side, and the second adhesive layer 16 and the second base material 17 can be provided on the first base material 20 and the second release liner. The second adhesive layer 16 and the second base material 17 may be formed by applying and curing a material for forming the second adhesive layer 16 or the second base material 17, or a second adhesive layer 16 and a second base material 17 formed in advance may be attached.

In addition, the second base material may be a weather resistant base material.

### [Method for Attaching Sensor Package]

Next, the method for attaching the sensor package according to the present embodiment will be described.

The method for attaching the sensor package according to the present embodiment includes a step of attaching the sensor package to the object. Before the bonding adhesive layer is cured, the object and the sensor package are adhered to each other by the bonding adhesive layer and the first adhesive layer.

In addition, before the bonding adhesive layer is cured, the object and the FGB sensor held by the bonding adhesive layer are adhered to each other by the bonding adhesive layer, and the object and the FBG sensor are firmly bonded to each other by curing the bonding adhesive layer. Therefore, the FBG sensor can detect a signal of the object through only the bonding adhesive layer without through the first adhesive layer or the resin portion, and can improve the detection accuracy of the sensor.

The bonding adhesive layer in the sensor package is preferably cured by a curing agent. In a case where the bonding adhesive layer in the sensor package is cured by the curing agent, a step of bringing the bonding adhesive layer into contact with the curing agent is necessary. The bonding adhesive layer reacts with the curing agent by being in contact with the curing agent. The step of bringing the bonding adhesive layer into contact with the curing agent may include a step of applying the curing agent to at least one of the bonding adhesive layer and the object, and a step of attaching the sensor package to the object via the bonding adhesive layer.

That is, the method for attaching the sensor package according to the present embodiment is the method for attaching a sensor package described above,
the bonding adhesive layer in the sensor package being cured by the curing agent, the method for attaching the sensor package including:
a step of applying the curing agent to at least one of the bonding adhesive layer and the object; and
a step of attaching the sensor package to the object via the bonding adhesive layer.

For example, the step of bringing the bonding adhesive layer into contact with the curing agent may include a step of applying the curing agent to the bonding adhesive layer and a step of attaching the sensor package to the object, and may include a step of applying the curing agent to the object and a step of attaching the sensor package to the object such that the bonding adhesive layer and the applied curing agent are in contact with each other.

In addition, the step of bringing the bonding adhesive layer into contact with the curing agent may include the step of applying the curing agent to the bonding adhesive layer, a step of applying the curing agent to the object, and a step of attaching the sensor package to the object such that the curing agent applied to the bonding adhesive layer and the curing agent applied to the object are in contact with each other.

That is, a method for attaching a sensor package according to another embodiment is the method for attaching a sensor package described above,
the bonding adhesive layer in the sensor package being cured by the curing agent, the method for attaching a sensor package including:
a step of applying the curing agent to the bonding adhesive layer;
a step of applying the curing agent to the object; and
a step of attaching the sensor package to the object such that the curing agent applied to the bonding adhesive layer and the curing agent applied to the object are in contact with each other.

If necessary, the bonding adhesive layer and the curing agent may be heated, and a heating temperature is, for example, preferably 50°C or higher, more preferably 70°C or higher, and is, for example, preferably 130°C or lower, more preferably 110°C or lower.

A reaction temperature is preferably room temperature. Room temperature is a temperature at which the above heating (for example, heating at 50°C or higher) for causing the bonding adhesive layer and the curing agent to react with each other is not performed, and is, for example, lower than 50°C, preferably 40°C or lower, and is, for example, 10°C or higher, preferably 20°C or higher.

When the reaction temperature is room temperature, the sensor package can be bonded to the object even more easily without the need of heating for causing the bonding adhesive layer and the curing agent to react with each other, and excellent workability is obtained.

A reaction time is, for example, 30 minutes or more, preferably 12 hours or more, and is, for example, 96 hours or less, preferably 48 hours or less.

Accordingly, the bonding adhesive layer is cured to form a cured layer. In particular, the bonding adhesive layer is preferably cured at room temperature.

The object and the FBG sensor are firmly bonded by the cured layer, and the detection accuracy of the FBG sensor can be improved.

Shear adhesion of the cured layer is, for example, 0.1 MPa or more, preferably 0.4 MPa or more, more preferably 0.6 MPa or more, further preferably 0.7 MPa or more, particularly preferably 1.0 MPa or more, further preferably 2.3 MPa or more, further preferably 2.5 MPa or more, and further preferably 3.5 MPa or more.

In a case where the shear adhesion of the cured layer is equal to or greater than the above lower limit, the bonding adhesive layer is excellent in adhesive properties and can reliably bond the object and the FBG sensor.

The shear adhesion of the cured layer is measured by the following method. That is, the bonding adhesive layer is sandwiched between two released polyethylene terephthalate films, one polyethylene terephthalate film is released from the bonding adhesive layer, the released bonding adhesive layer is disposed on a first slate plate, and then the other polyethylene terephthalate film is peeled off from the bonding adhesive layer. Separately, the curing agent is disposed on a second slate plate. Next, the bonding adhesive layer and the curing agent are brought into contact with each other so as to be sandwiched between the first slate plate and the second slate plate, and left to stand for 24 hours to form a cured layer, then the first slate plate and the second slate plate are pulled in a shearing direction at a speed of 5 mm/min, and a strength when the two slate plates are peeled off is determined as the shear adhesion.

In a method for attaching the sensor package according to the another embodiment,
surfaces of a first adhesive layer and a bonding adhesive layer of the sensor package on sides to be attached to the object are protected by a first release liner,
the sensor package includes a first base material, a second adhesive layer, and a second base material in this order on a surface on a side opposite to the surface of the first adhesive layer on the side to be attached to the object, and
the sensor package includes a second release liner in a portion between the first base material and the second adhesive layer,
the method for attaching the sensor package includes:
   a step of peeling off the first release liner and bringing the curing agent into contact with the bonding adhesive layer;
   a step of attaching a release surface of the sensor package from which the first release liner is peeled off to the object; and
   a step of peeling off the second release liner and attaching a release surface of the second adhesive layer from which the second release liner is peeled off to the first base material.

As described above, the second release liner may include an extension portion that extends beyond the second adhesive layer in a surface spreading direction of the second release liner and is exposed.

In addition, as described above, a tab may be provided by folding a part of a tip of the second release liner on an inner side of the sensor package toward the first base material.

The step of bringing the bonding adhesive layer into contact with the curing agent is similar to that described above.

As shown in FIGS. 6 to 8, the sensor package includes the second release liner in a portion between the first base material and the second adhesive layer, so that the FBG sensor can be visually observed when the release surface from which the first release liner is released is attached to the object. Therefore, positioning when the FBG sensor is attached to the object is facilitated, and excellent workability is obtained.

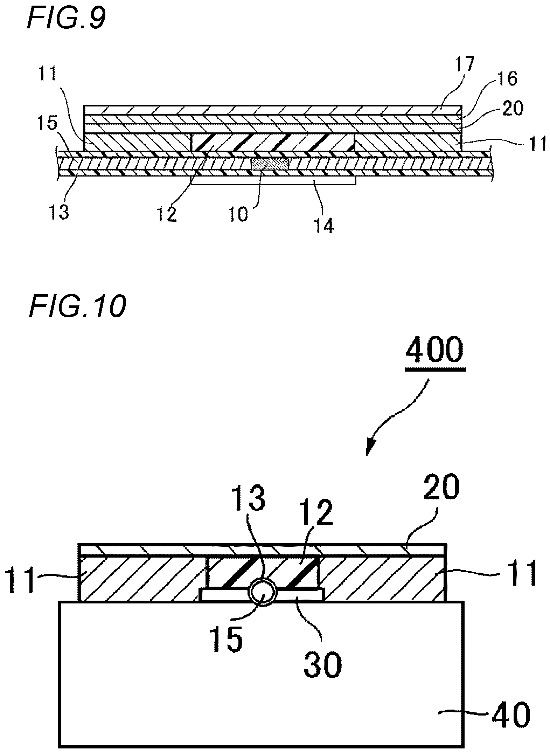

Next, with the step of peeling off the second release liner and attaching the release surface of the second adhesive layer from which the second release liner is peeled off to the first base material, as shown in FIG. 9, the second adhesive layer and the second base material are laminated in this order on the surface of the first base material on a side opposite to the resin portion. Accordingly, since the first adhesive layer, the FBG sensor, the resin portion, and the first base material are protected by the second adhesive layer and the second base material, weather resistance of the sensor package is improved.

### [Set Including Sensor Package and Curing Agent]

The sensor package according to the embodiment of the present invention can be made a set together with the curing agent. That is, the set according to the embodiment of the present invention includes the sensor package and the curing agent according to the embodiment of the present invention.

The sensor package and the curing agent in the set according to the embodiment of the present invention have the same meaning as the sensor package and the curing agent described above, and those preferred sensor packages and curing agents are also the same.

According to the set according to the embodiment of the present invention, the sensor package and the object can be easily and firmly bonded to each other, and excellent workability is obtained.

### [Bonded Structure]

The bonded structure according to the embodiment of the present invention is a bonded structure in which a sensor package and an object are bonded to each other via a cured layer, the sensor package including a first base material and an optical fiber having an FBG sensor portion disposed on the first base material, the bonded structure including:
a resin portion located on the first base material;
a first adhesive layer located on the first base material; and
the cured layer located on a surface of the resin portion on a side opposite to the first base material, in which
the first base material is attached to the object via the first adhesive layer, and
the FBG sensor portion of the optical fiber is in contact with the resin portion and held by the cured layer.

FIG. 10 is a schematic cross-sectional view of a bonded structure 400 according to the embodiment of the present invention.

Members similar to those in the above embodiment of the sensor package are denoted by the same reference sign, and a detailed description thereof is omitted.

The bonded structure 400 shown in FIG. 10 is a bonded structure in which the sensor package and the object 40 are bonded to each other via the cured layer 30 obtained by the above bonding adhesive layer being cured, the sensor package including the first base material 20 and the optical fiber 15 having the FBG sensor portion 10 disposed on the first base material, the bonded structure including: the resin portion 12 located on the first base material 20; the first adhesive layer 11 located on the first base material 20; and the cured layer 30 located on a surface of the resin portion 12 on a side opposite to the first base material 20. In the bonded structure, the first base material 20 is attached to the object 40 via the first adhesive layer 11, and the FBG sensor portion 10 on the optical fiber 15 is in contact with the resin portion 12 and held by the cured layer 30.

The bonded structure 400 shown in FIG. 10 is a structure in which the sensor package shown in FIG. 4 is attached to the object 40 by the bonding adhesive layer 14 and the first adhesive layer 11, in which the bonding adhesive layer 14 is cured to form the cured layer 30, and thus the sensor package and the object are bonded to each other via the cured layer.

In the above description, a structure using the sensor package shown in FIG. 5 may be used instead of the sensor package shown in FIG. 4. Specifically, the position of the FBG sensor portion 10 may be positioned closer to a cured layer 30 side while being in contact with the resin portion 12 and held by the cured layer 30 obtained by the bonding adhesive layer being cured.

The bonded structure may include a second adhesive layer and a second base material in this order on a surface of the first base material on a side opposite to a surface on a first adhesive layer side.

The bonded structure is obtained by bonding the sensor package and the object using the above-described method for attaching the sensor package.

Next, a material forming the sensor package according to the embodiment of the present invention and the like will be described.

### [First Base Material]

As the first base material, various base materials can be preferably used. As the first base material, for example, a resin film, paper, cloth, a rubber film, a foam film, a metal foil, or a composite or a laminated structure thereof can be used. Among those, a film base material including a resin film is preferable from the viewpoint of attachment property and appearance. Including the resin film is also advantageous in terms of dimensional stability, thickness accuracy, workability, tensile strength, and the like. Examples of the resin film include: polyolefin-based resin films such as PE, PP, and an ethylene-propylene copolymer; polyester-based resin films such as PET, polybutylene terephthalate, and polyethylene naphthalate; a vinyl chloride-based resin film; a vinyl acetate-based resin film; a polyimide-based resin film; a polyamide-based resin film; a fluorine-based resin film; and cellophane. Preferable examples thereof include a resin film formed of PE, PP, or PET.

Among the resin films, a polyester film is more preferred, and among those, a PET film is further preferred. The film base material may have a single-layer structure or a multilayer structure of two or three or more layers.

The first base material is preferably transparent or translucent.

In order to accurately obtain the information on the object, an attachment position of the FBG sensor is important when the sensor package is attached to the object. Since the first base material is transparent or translucent, the position of the FBG sensor in the sensor package can be grasped, and thus positioning when the sensor package is attached to the object is facilitated and excellent workability is obtained.

Specifically, the first base material preferably exhibits a total light transmittance of 80% or more (for example, 90% or more, typically 95% or more). In addition, a haze value of the first base material is preferably 10% or less (for example, 5% or less).

A thickness of the first base material is preferably 5µm or more, and more preferably 10µm or more from the viewpoint of ensuring a strength for the first base material to function as a support in the sensor package. In addition, the thickness of the first base material is preferably 300 µm or less, and more preferably 200 µm or less from the viewpoint of realizing appropriate flexibility in the sensor package.

### [First Adhesive Layer]

The first adhesive layer can be made of an adhesive. The adhesive is preferably a pressure-sensitive adhesive.

As the adhesive (adhesive composition) forming the first adhesive layer, for example, one type or a combination of two or more types of a rubber-based adhesive, an acrylic adhesive, a vinyl alkylether adhesive, a silicone-based adhesive, a polyester-based adhesive, a polyamide-based adhesive, a urethane-based adhesive, a fluorine-based adhesive, a styrene-diene block copolymer adhesive, and an epoxy-based adhesive can be used. In addition, a photocurable adhesive (such as an ultraviolet curable adhesive) can also be used as the adhesive.

A thickness of the first adhesive layer is preferably 50 µm or more, more preferably 100 µm or more, and further preferably 300 µm or more. In addition, the thickness of the first adhesive layer is preferably 2 mm or less, more preferably 1.5 mm or less, and further preferably 1 mm or less.

In a case where a curing reaction by heat or an activation energy ray is used in preparation of the adhesive composition, it is preferable that the adhesive composition contains a polymerization initiator such as a thermal polymerization initiator or a photopolymerization initiator. As the polymerization initiator, the photopolymerization initiator can be preferably used in view of an advantage that a polymerization time can be shortened. The polymerization initiator may be used alone or in combination of two or more types thereof.

The first adhesive layer may further have a cell structure. The "cell structure" may be a structure having a gas component, and may be a "cell" having a structure including only a gas component and having no outer shell, or may be a "hollow microsphere" having a structure in which a gas component such as a microbubble of glass is sealed in an outer shell.

The first adhesive layer (or adhesive composition) may contain an appropriate additive. Examples of such an additive include a crosslinking agent (for example, a polyisocyanate-based crosslinking agent, a silicone-based crosslinking agent, an epoxy-based crosslinking agent, an alkyl-etherified melamine-based crosslinking agent, or the like), a tackifier (for example, solid, semisolid, or liquid tackifier at room temperature, which is made of rosin derivative resin, polyterpene resin, petroleum resin, oil-soluble phenol resin, and the like), a plasticizer, a filler, an anti-aging agent, an antioxidant, a colorant (pigment, dye, and the like), and the like.

The adhesive composition for forming the first adhesive layer can be prepared by mixing monomer components (for example, alkyl (meth)acrylate) for forming a base polymer and, if necessary, a hollow microsphere, a polymerization initiator, various additives, and the like using a known method. In addition, a part of the monomer components may be polymerized if necessary, such as for viscosity adjustment.

Specific examples of a preparation method include the following procedure.
(i) The monomer component (for example, alkyl (meth)acrylate or other copolymerized monomer) for forming the base polymer and the polymerization initiator (for example, photopolymerization initiator) are mixed to prepare a monomer mixture, and
(ii) a polymerization reaction (for example, ultraviolet polymerization) corresponding to a type of the polymerization initiator is performed on the monomer mixture to prepare a composition (syrup) in which only a part of the monomer component is polymerized. Next,
(iii) the obtained syrup is blended with the hollow microsphere, a fluorine-based surfactant and other additives as necessary. Further, in a case where a cell is contained,
(iv) an adhesive composition can be obtained by introducing the cell into a blend obtained in (iii) and mixing the cell and the blend. The preparation method for the adhesive composition is not limited thereto, and for example, a preparation method such as blending the fluorine-based surfactant or the hollow microsphere in advance in the monomer mixture when preparing the syrup may be used.

The first adhesive layer can be formed by a known or common method. Examples thereof include a method in which the above adhesive composition is applied onto the first base material to form the first adhesive layer, and the first adhesive layer is cured (for example, cured by heat or cured by activation energy ray) or dried as necessary. Above all, as described above, curing by irradiation with the activation energy ray is preferred.

The above adhesive composition may be applied onto a support base material, cured, and dried to manufacture an adhesive sheet, then the adhesive sheet may be bonded to the first base material, and the support base material may be released to form the first adhesive layer.

As the above adhesive sheet, a commercially available product can also be used, for example, "Hyper Joint H7004, H7008, H7012, H8004, H8008, H8012, H9004, H9008, H9012" (base material-less double-sided adhesive sheet) manufactured by Nitto Denko Corporation can be used.

### [Resin Portion]

The resin portion is preferably transparent or translucent. Since the resin portion is transparent or translucent, the position of the FBG sensor in contact with the resin portion can be grasped more accurately, and thus positioning when the sensor package is attached to the object is facilitated.

The resin portion preferably has adhesiveness. Specifically, a peel adhesion of the resin portion with respect to an aluminum plate is preferably 0.5 N/20 mm or more, more preferably 1.0 N/20 mm or more, and further preferably 2.0 N/20 mm or more. Since the resin portion has adhesiveness, the optical fiber can be fixed at the time of manufacturing the sensor package, and excellent manufacturability is obtained. In addition, in the obtained sensor package, since no gap is formed between the resin portion and the optical fiber, outside air or moisture can be prevented from entering into the FBG sensor portion 10, and a sensor package having excellent durability can be obtained.

Here, the peel adhesion of the resin portion is obtained as a peel adhesion of the resin portion when a resin portion having a width of 20 mm is attached to an aluminum plate and then the resin portion is peeled off from the aluminum plate at a 90 degree angle at a speed of 300 mm/min.

An elastic modulus of the resin portion is preferably less than 1.0 × 10⁷ Pa, more preferably 5.0 × 10⁶ Pa or less, and further preferably 1.0 × 10⁶ Pa or less. In addition, a lower limit of the elastic modulus of the resin portion is not particularly limited, but is usually 1.0 × 10⁴ Pa or more.

When the elastic modulus of the resin portion is less than 1.0 × 10⁷ Pa, the optical fiber is excellent in fixation. In addition, since cure shrinkage and stress relaxation of a resin hardly occur, initial value variation of the FBG sensor hardly occurs, and the detection accuracy is further improved.

The elastic modulus of the resin portion can be measured as an initial tensile elastic modulus at 25°C by a method to be described in examples.

A thickness of the resin portion is preferably 50 µm or more, more preferably 100 µm or more, and further preferably 300 µm or more. In addition, the thickness of the resin portion is preferably 2 mm or less, more preferably 1.5 mm or less, and further preferably 1 mm or less.

The resin portion can be made of an adhesive.

As the adhesive (adhesive composition) forming the resin portion, for example, one type or a combination of two or more types of a rubber-based adhesive, an acrylic adhesive, a vinyl alkylether adhesive, a silicone-based adhesive, a polyester-based adhesive, a polyamide-based adhesive, a urethane-based adhesive, a fluorine-based adhesive, a styrene-diene block copolymer adhesive, and an epoxy-based adhesive can be used.

The resin portion can be provided by using a commercially available adhesive sheet, and for example, in the case of an adhesive sheet using the acrylic adhesive, "CS9918U" manufactured by Nitto Denko Corporation or the like can be used. The adhesive sheet may be used alone, or a laminate of a plurality of adhesive sheets may be used in order to obtain a desired thickness of the resin portion.

The resin portion can also be formed of a resin composition. The resin composition is preferably a liquid curable resin composition containing a curable resin, and preferably contains a resin that is cured at room temperature. The resin that is cured at room temperature can be obtained by appropriately combining a curable resin and a curing agent.

Examples of the curable resin include a phenol resin, an amino resin, an unsaturated polyester resin, a polyurethane resin, a silicone resin, an epoxy resin, and a thermosetting polyimide resin, and the polyurethane resin is preferred.

A content ratio of the curable resin in the resin portion is preferably 5 mass% to 60 mass%, and more preferably 10 mass% to 50 mass% from the viewpoint of appropriately curing the resin portion.

The resin portion can also be formed using a commercially available liquid curable resin composition, and for example, as a commercially available product containing a silylated urethane resin, "Ultraversatile SU software" manufactured by Konishi Co., Ltd., or the like can be used.

### [Covering Material]

The optical fiber may be covered with the covering material.

Examples of a material of the covering material include a metal material such as a gold-coated metal material or the like, and a resin material such as polyimide, silicone, nylon, acryl, and vinyl chloride.

The covering material may be a resin coating material for coating the optical fiber with a resin, or may be a sheath material or the like.

From the viewpoint of improving the detection accuracy of the FBG sensor, a material in which an elastic modulus of the covering material is high is preferred.

The elastic modulus of the covering material is preferably 1.0 × 10⁸ Pa or more, more preferably 3.0 × 10⁸ Pa or more, and further preferably 5.0 × 10⁸ Pa or more.

The material in which the elastic modulus is high is preferably polyimide.

### [Bonding Adhesive Layer]

The bonding adhesive layer according to the present embodiment is positioned on the surface of the resin portion on a side opposite to the first base material. The FBG sensor is provided so as to be in contact with the resin portion and to be held by the bonding adhesive layer. Accordingly, the FBG sensor is attached to the object by the bonding adhesive layer.

The bonding adhesive layer according to the present embodiment adheres the object and the FBG sensor to each other before the bonding adhesive layer is cured, and firmly bonds the object and the FBG sensor to each other by curing the bonding adhesive layer.

In order to highly detect information from the object and to prevent the sensitivity of the FBG sensor from being greatly reduced, an elastic modulus of the cured layer formed by curing the bonding adhesive layer is preferably 1.0 × 10⁸ Pa or more, more preferably 3.0 × 10⁸ Pa or more, and further preferably 5.0 × 10⁸ Pa or more.

When being brought into contact and reacting with the curing agent, the bonding adhesive layer is a cured layer (sheet), extends along a surface direction (direction perpendicular to the thickness direction), and has a substantially flat plate shape having a flat front surface and back surface. The curing agent for curing the bonding adhesive layer will be described later.

The bonding adhesive layer is formed in a layer shape by a bonding adhesive component.

The bonding adhesive component is not particularly limited as long as the bonding adhesive component is a base of a two-part adhesive capable of forming a layer, and examples thereof include a silicone compound, a polyol compound such as polypropylene glycol, a urethane resin, and an epoxy resin. The bonding adhesive component preferably contains the epoxy resin as a main component. Accordingly, the FBG sensor and the resin portion can be easily and firmly bonded to the object.

Examples of the epoxy resin include: bisphenol-based epoxy resins such as a bisphenol A epoxy resin, a bisphenol F epoxy resin, a bisphenol S epoxy resin, and a hydrogenated bisphenol A epoxy resin; a naphthalene epoxy resin; a biphenyl epoxy resin; a dicyclo epoxy resin; an alicyclic epoxy resin; a triglycidyl isocyanurate epoxy resin; a hydantoin epoxy resin; a glycidyl ether-based epoxy resin; and a glycidylamino-based epoxy resin.

The epoxy resin is preferably a bisphenol-based epoxy resin. The epoxy resin can be used alone or in combination of two or more types thereof.

The epoxy resin may be in any of liquid, semi-solid and solid forms at room temperature, and more preferred examples thereof include a semi-solid epoxy resin used alone, and a liquid epoxy resin and a solid epoxy resin used in combination. Accordingly, a tacky layered bonding adhesive layer can be reliably formed from the bonding adhesive component.

Specifically, a liquid epoxy resin at room temperature is a liquid at 25°C. A viscosity of the liquid epoxy resin at 25°C is, for example, 3 Pa·s or more, preferably 8 Pa·s or more, and is, for example, 50 Pa·s or less, preferably 30 Pa·s or less.

Specifically, a solid epoxy resin at room temperature is a solid at 25°C. The softening point of the solid epoxy resin is, for example, 70°C or higher, and preferably 75°C or higher.

A blending ratio of the liquid epoxy resin to the solid epoxy resin (liquid epoxy resin/solid epoxy resin (mass ratio)) is, for example, 1.0 or more, preferably 1.5 or more, and is, for example, 4.0 or less, preferably 3.0 or less.

When the blending ratio of the liquid epoxy resin to the solid epoxy resin is equal to or greater than the above lower limit, the viscosity of the bonding adhesive component is reduced, unevenness in application can be prevented, and a uniform bonding adhesive layer can be obtained. When the blending ratio of the liquid epoxy resin to the solid epoxy resin is equal to or smaller than the above upper limit, a tacky layered bonding adhesive layer can be obtained.

The blending ratio of the epoxy resin is set to a ratio at which the epoxy resin is the main component in the bonding adhesive component, and specifically, is, for example, 70 mass% or more, preferably 75 mass% or more, more preferably 80 mass% or more, further preferably 90 mass% or more, and is, for example, 100 mass% or less, with respect to the bonding adhesive component.

Preferably, the bonding adhesive component is formed of only the epoxy resin, that is, the blending ratio of the epoxy resin to the bonding adhesive component is 100 mass%.

If necessary, an acrylic polymer can also be blended with the bonding adhesive component. Accordingly, a cohesive force of the bonding adhesive component can be improved.

The acrylic polymer is obtained by causing a monomer component containing (meth)acrylate to react. The (meth)acrylate is an alkyl methacrylate and/or an alkyl acrylate, and specific examples thereof include an alkyl (meth)acrylate having 1 to 20 carbon atoms, such as methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, n-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nondecyl (meth)acrylate, and eicosyl (meth)acrylate.

The (meth)acrylate is preferably an alkyl (meth)acrylate having 2 to 14 carbon atoms, and more preferably an alkyl (meth)acrylate having 4 to 9 carbon atoms.

The (meth)acrylate can be used alone or in combination of two or more types thereof.

A blending ratio of the (meth)acrylate with respect to the monomer components is, for example, 70 mass% or more, preferably 80 mass% or more, and is, for example, 99 mass% or less, preferably 98 mass% or less.

The monomer component may further contain a copolymerizable monomer copolymerizable with the (meth)acrylate.

Examples of the copolymerizable monomer include: carboxy group-containing monomers or acid anhydrides thereof such as (meth)acrylic acid, itaconic acid, maleic acid, crotonic acid, and maleic anhydride; hydroxyl group-containing (meth)acrylates such as 2-hydroxyethyl (meth)acrylate and 3-hydroxypropyl (meth)acrylate; amide group-containing monomers such as (meth)acrylamide, N,N-dimethyl (meth)acrylamide, N-methylol (meth)acrylamide, N-methoxymethyl (meth)acrylamide, and N-butoxymethyl (meth)acrylamide; vinyl esters such as vinyl acetate; aromatic vinyl compounds such as styrene and vinyl toluene; (meth)acrylonitrile; N-(meth)acryloylmorpholine; and N-vinyl-2-pyrrolidone.

The copolymerizable monomer is preferably a carboxy group-containing monomer or a hydroxyl group-containing (meth)acrylate, and more preferably (meth)acrylic acid or 2-hydroxyethyl (meth)acrylate.

These copolymerizable monomers can be used alone or in combination of two or more types thereof. A combination use of a carboxy group-containing monomer and a hydroxyl group-containing (meth)acrylate is preferred, and a combination use of (meth)acrylic acid and 2-hydroxyethyl (meth)acrylate is more preferred.

A blending ratio of the copolymerizable monomer with respect to 100 parts by mass of (meth)acrylate is, for example, 0.1 parts by mass or more, preferably 0.3 parts by mass or more, and is, for example, 15 parts by mass or less, preferably 10 parts by mass or less.

In order to cause a reaction of the monomer component, for example, the (meth)acrylate and optionally the copolymerizable monomer are blended to prepare a monomer component, and the monomer component is prepared by a known polymerization method such as solution polymerization, bulk polymerization, emulsion polymerization, or various kinds of radical polymerization.

The polymerization method is preferably solution polymerization.

In the solution polymerization, for example, the monomer component and a polymerization initiator are blended with a solvent to prepare a monomer solution, and then the monomer solution is heated.

Examples of the solvent include an organic solvent. Examples of the organic solvent include: aromatic solvents such as toluene, benzene, and xylene; ether solvents such as ethyl acetate; ketone solvents such as acetone and methyl ethyl ketone; ester solvents such as ethyl acetate; and amide solvents such as N,N-dimethylformamide. The solvent may be used alone or in combination of two or more kinds thereof, and a combination use of an aromatic solvent and an ether solvent is preferred. A blending ratio of the solvent with respect to 100 parts by mass of the monomer component is, for example, 10 parts by mass or more, preferably 50 parts by mass or more, and is, for example, 1,000 parts by mass or less, preferably 500 parts by mass or less.

Examples of the polymerization initiator include a peroxide-based polymerization initiator and an azo-based polymerization initiator.

Examples of the peroxide-based polymerization initiator include organic peroxides such as peroxycarbonate, ketone peroxide, peroxyketal, hydroperoxide, dialkyl peroxide, diacyl peroxide, and peroxyester.

Examples of the azo-based polymerization initiator include azo compounds such as 2,2'-azobisisobutyronitrile, 2,2'-azobis(2-methylbutyronitrile), 2,2'-azobis(2,4-dimethylvaleronitrile), and 2,2'-azobisisobutyric acid dimethyl.

The polymerization initiator is preferably an azo-based polymerization initiator.

A blending ratio of the polymerization initiator with respect to 100 parts by mass of the monomer component is, for example, 0.01 part by mass or more, preferably 0.05 part by mass or more, and is, for example, 5 parts by mass or less, preferably 3 parts by mass or less.

A heating temperature is, for example, 50°C or higher and 80°C or lower, and a heating time is, for example, 1 hour or more and 24 hours or less.

Accordingly, the monomer component is polymerized to obtain an acrylic polymer solution containing an acrylic polymer.

The acrylic polymer solution is blended with the epoxy resin such that a blending ratio of the acrylic polymer with respect to 100 parts by mass of the bonding adhesive component is, for example, 1 part by mass or more, preferably 2 parts by mass or more, and is, for example, 50 parts by mass or less, preferably 30 parts by mass or less. In addition, a blending ratio of the acrylic polymer with respect to 100 parts by mass of the epoxy resin is, for example, 1 part by mass or more, preferably 2 parts by mass or more, and is, for example, 43 parts by mass or less, preferably 35 parts by mass or less.

When the blending ratio of the acrylic polymer is equal to or greater than the above lower limit, the cohesive force of the bonding adhesive component, and consequently an adhesive force can be improved, and the peel adhesion of the bonding adhesive layer can be improved.

When the blending ratio of the acrylic polymer is equal to or less than the above upper limit, curing can be performed.

A small amount of a curing agent can also be added to the bonding adhesive component. Accordingly, the cohesive force of the bonding adhesive layer can be improved. Examples of the curing agent are given below.

A blending ratio of the curing agent is adjusted to a ratio for improving the peel adhesion of the bonding adhesive layer while slightly curing (not completely curing) the bonding adhesive component.

In order to obtain the bonding adhesive component, for example, the epoxy resin and optionally the acrylic polymer (acrylic polymer solution) and/or the curing agent are blended, and optionally the blend is diluted with the solvent to prepare a varnish.

The solvent may be any solvent as long as it can dissolve the bonding adhesive component, and examples thereof include the above solvents. The solvent is preferably a ketone solvent.

A concentration of the bonding adhesive component in the varnish is, for example, 20 mass% or more, preferably 40 mass% or more, and is, for example, 80 mass% or less, preferably 70 mass% or less.

In addition, in a case where the acrylic polymer is blended with the bonding adhesive component, a crosslinking agent can also be blended in preparing the bonding adhesive component.

Examples of the crosslinking agent include an isocyanate-based crosslinking agent, an aziridine-based crosslinking agent, an epoxy-based crosslinking agent, a metal chelate-based crosslinking agent, and an isocyanate-based crosslinking agent is preferred.

Examples of the isocyanate-based crosslinking agent include: aromatic diisocyanates such as tolylene diisocyanate and xylene diisocyanate; alicyclic diisocyanates such as isophorone diisocyanate; aliphatic diisocyanates such as hexamethylene diisocyanate; and a modified product of these isocyanates (specifically, a tolylene diisocyanate adduct of trimethylolpropane or the like).

The crosslinking agent is preferably a modified product of an isocyanate.

A blending ratio of the crosslinking agent with respect to 100 parts by mass of the acrylic polymer is, for example, 1 part by mass or more, preferably 5 parts by mass or more, and is, for example, 20 parts by mass or less, preferably 15 parts by mass or less. Thus, the bonding adhesive component is prepared.

As will be described later, a bonding adhesive layer is formed to have a predetermined thickness by applying a bonding adhesive component onto a base material and drying the bonding adhesive component.

A thickness of the bonding adhesive layer is, for example, 1 µm or more, preferably 5 µm or more, more preferably 10 µm or more, and is, for example, 1,000 µm or less, preferably 500 µm or less, more preferably 100 µm or less.

The curing agent can cause the bonding adhesive layer to cure by being brought into contact with and reacting with the bonding adhesive layer and may be a curing agent layer (sheet), and in this case, the curing agent layer extends along a surface direction (direction perpendicular to the thickness direction), and has a substantially flat plate shape having a flat front surface and back surface.

The curing agent layer is formed from a curing component in a layer shape, and the curing component contains the curing agent.

The curing agent is not particularly limited as long as it is a curing agent for the two-part adhesive, and in a case where the bonding adhesive component contains an epoxy resin, examples of the curing agent include an epoxy resin curing agent such as an imidazole compound, an amine compound, and an amide compound.

Examples of the imidazole compound include methylimidazole, 2-ethyl-4-methylimidazole, 1-isobutyl-2-methylimidazole, 1-benzyl-2-methylimidazole, 2-ethyl-4-methylimidazole, ethylimidazole, isopropylimidazole, 1,2- methylimidazole, 2,4-dimethylimidazole, phenylimidazole, undecylimidazole, heptadecylimidazole, 2-phenyl-4-methylimidazole, 2-phenyl-4,5-dihydroxymethylimidazole, and 2-phenyl-4-methyl-5-hydroxymethylimidazole, and 1-isobutyl-2-methylimidazole, 1-benzyl-2-methylimidazole, and 2-ethyl-4-methylimidazole are preferred, 1-isobutyl-2-methylimidazole and 1-benzyl-2-methylimidazole are more preferred, 1-isobutyl-2-methylimidazole is further preferred.

Examples of the amine compound include ethylenediamine, propylenediamine, diethylenetriamine, triethylenetetramine, an amine adduct thereof, metaphenylenediamine, diaminodiphenylmethane, and diaminodiphenylsulfone.

Examples of the amide compound include dicyandiamide and polyamide, and dicyandiamide is preferred.

The curing agent is preferably an imidazole compound.

The curing agent can be used alone or in combination of two or more types thereof.

The blending ratio of the curing agent with respect to the curing component is, for example, 10 mass% or more, preferably 30 mass% or more, more preferably 50 mass% or more, further preferably 80 mass% or more, particularly preferably 90 mass% or more, and is, for example, 100 mass% or less. When the blending ratio of the curing agent is equal to or greater than the above lower limit, the bonding adhesive layer is excellent in adhesive properties.

Preferably, the curing component is formed of only the curing agent, that is, the ratio of the curing agent with respect to the curing component is 100 mass%.

A curing accelerator may be optionally blended with the curing component.

Examples of the curing accelerator include: a urea compound such as 3-(3,4-dichlorophenyl)-1,1-dimethylurea (DCMU), N'-phenyl-N,N-dimethylurea, and 1,1'-(methyl-m-phenylene)bis(3,3'-dimethylurea); a tertiary amine compound such as triethylenediamine and tri-2,4,6-dimethylaminomethylphenol; a phosphorus compound such as triphenylphosphine, tetraphenylphosphonium tetraphenylborate, and tetra-n-butylphosphonium-o,o-diethylphosphorodithioate; a quaternary ammonium salt compound; and an organic metal salt compound, and a urea compound is preferred, 3-(3,4-dichlorophenyl)-1,1-dimethylurea is more preferred.

The curing accelerator can be used alone or in combination of two or more types thereof.

A blending ratio of the curing accelerator with respect to the curing component is, for example, 10 mass% or more, preferably 15 mass% or more, more preferably 25 mass% or more, and is, for example, 40 mass% or less. A blending ratio of the curing accelerator with respect to 100 parts by mass of the curing agent is 10 parts by mass or more, preferably 25 parts by mass or more, and is, for example, 60 parts by mass or less, preferably 50 parts by mass or less.

In order to prepare the curing component, the curing agent and optionally the curing accelerator are blended.

When the curing agent is solid, the curing agent is dissolved in a solvent to prepare a varnish, if necessary.

The solvent may be any solvent as long as it can dissolve the curing component, and examples thereof include the above solvents.

A concentration of the curing component in the varnish is, for example, 10 mass% or more, preferably 20 mass% or more, and is, for example, 90 mass% or less, preferably 50 mass% or less.

Thus, the curing component is prepared.

The curing agent is formed to have a predetermined thickness by applying the curing component onto the bonding adhesive layer or the base material and drying the curing component.

A thickness of the curing agent when applied is, for example, 1 µm or more, preferably 5 µm or more, more preferably 10 µm or more, and is, for example, 1,000 µm or less, preferably 800 µm or less, more preferably 500 µm or less.

The bonding adhesive layer is interposed between the object and the FBG sensor such that the bonding adhesive layer is in contact with the FBG sensor and the curing agent is in contact with the bonding adhesive layer.

In the bonding adhesive layer, the bonding adhesive component has pressure-sensitive adhesive properties before curing.

The pressure-sensitive adhesive properties before curing means that the bonding adhesive component has pressure-sensitive adhesive properties before the bonding adhesive component is completely cured by causing the bonding adhesive component to react with the curing component, and specifically, from before blending the bonding adhesive component and the curing component until the bonding adhesive component is completely cured after the blending.

That is, the bonding adhesive layer containing the bonding adhesive component has the pressure-sensitive adhesive properties.

Specifically, the peel adhesion of the bonding adhesive layer with respect to the aluminum plate is, for example, 0.5 N/20 mm or more, preferably 1.0 N/20 mm or more, more preferably 2.0 N/20 mm or more, further preferably 3.0 N/20 mm or more, particularly preferably 3.5 N/20 mm or more, and is, for example, 10 N/20 mm or less.

When the peel adhesion of the bonding adhesive layer with respect to the aluminum plate is equal to or greater than the above lower limit, the bonding adhesive layer is excellent in pressure-sensitive adhesive properties, and can adhere the FBG sensor and the object and position the FBG sensor.

The peel adhesion of the bonding adhesive layer is obtained as the peel adhesion of the bonding adhesive layer when the bonding adhesive layer having a width of 20 mm is adhered to the aluminum plate and then the bonding adhesive layer is peeled off from the aluminum plate at a 90 degree at a speed of 300 mm/min.

Thus, preferably, since the bonding adhesive layer has the pressure-sensitive adhesive properties, the object and the FBG sensor are adhered to each other by the bonding adhesive layer and the first adhesive layer before the bonding adhesive layer is cured. Therefore, reliable positioning of the FBG sensor with respect to the object is facilitated.

Thereafter, the bonding adhesive layer reacts with the curing agent and is cured.

A reaction temperature is, for example, room temperature.

In addition, the bonding adhesive layer and the curing agent may be heated, if necessary, and a heating temperature is, for example, 50°C or higher, preferably 70°C or higher, and is, for example, 160°C or lower, preferably 110°C or lower.

A reaction temperature is preferably room temperature. Room temperature is a temperature at which the above heating (for example, heating at 50°C or higher) for causing the bonding adhesive layer and the curing agent to react with each other is not performed, and is, for example, lower than 50°C, preferably 40°C or lower, and is, for example, 10°C or higher, preferably 20°C or higher.

When the reaction temperature is room temperature, the FBG sensor portion 10 and the object can be bonded to each other even more easily without the need of heating for causing the bonding adhesive layer and the curing agent to react with each other. In addition, it is possible to prevent the FBG sensor portion 10 from being damaged by the heating.

A reaction time is, for example, 15 minutes or more, preferably 1 hour or more, more preferably 12 hours or more, and is, for example, 96 hours or less, preferably 48 hours or less. Accordingly, the bonding adhesive layer is cured. Preferably, the bonding adhesive layer is cured at room temperature.

A thickness of the bonding adhesive layer after curing is, for example, 1 µm or more, preferably 5 µm or more, more preferably 30 µm or more, and is, for example, 2,000 µm or less, preferably 1,000 µm or less, more preferably 500 µm or less, further preferably 100 µm or less.

By the cured bonding adhesive layer, the FBG sensor and the resin portion are bonded to the object.

### [Second Base Material]

The second base material is preferably a film, and is preferably a resin film that plays a role of protection and decoration. The second base material may be, for example, a weather resistant film such as a moisture resistant film or a light resistant film, a design film, a surface protective film such as a decorative film or a scratch resistant film, or the like. From the viewpoint of outdoor use, a weather resistant film is preferred.

Examples of the resin forming the resin film include polyimide, polyethylene (PE), polypropylene (PP), fluorinated ethylene propylene copolymer (FEP), ethylene-tetrafluoroethylene copolymer (ETFE), polytetrafluoroethylene (PTFE), polyethylene terephthalate (PET), tetrafluoroethylene-perfluoroalkyl vinyl ether copolymer (PFA), and polyvinylidene difluoride (PVDF), and polyvinylidene difluoride (PVDF) is preferred.

### [Second Adhesive Layer]

The second adhesive layer can be used without particular limitation. For example, a polymer such as an acrylic polymer, a silicone polymer, a polyester, a polyurethane, a polyamide, a polyvinyl ether, a vinyl acetate/vinyl chloride copolymer, a modified polyolefin, an epoxy-based polymer, a fluorine-based polymer, a rubber-based polymer such as a natural rubber and a synthetic rubber may be appropriately selected and used as a base polymer. An acrylic adhesive is preferably used in terms of exhibiting appropriate wettability, cohesiveness, and adhesiveness, and being excellent in weather resistance, heat resistance, and the like.

### [Release Liner]

The first release liner and the second release liner that protect the first adhesive layer and the second adhesive layer until use will be described.

As the first release liner and the second release liner, a common release paper or the like can be used, and although not particularly limited, for example, a base material having a release-treated layer, a low adhesion base material formed of a fluorine-based polymer, and a low adhesion base material formed of a nonpolar polymer can be used.

Examples of the base material having a release-treated layer include a plastic film or paper subjected to surface treatment with a release treatment agent such as a silicone-based release treatment agent, a long-chain alkyl-based release treatment agent, a fluorine-based release treatment agent, and molybdenum sulfide.

Examples of the fluorine-based polymer of the low adhesion base material formed of a fluorine-based polymer include polytetrafluoroethylene, polychlorotrifluoroethylene, polyvinyl fluoride, polyvinylidene difluoride, a tetrafluoroethylene-hexafluoropropylene copolymer, and a chlorofluoroethylene-vinylidene fluoride copolymer.

Examples of the nonpolar polymer of the low adhesion base material formed of a nonpolar polymer include olefin-based resins (for example, polyethylene, polypropylene, and the like). The release liner can be formed by a known or common method. In addition, a thickness and the like of the release liner are also not particularly limited.

### [Object]

The object to which the FBG sensor is attached is not particularly limited as long as it can be an object to be measured by the FBG sensor, and examples thereof include various structures such as a metal product, a wood product, a plastic product, a glass product, a building (inner and outer wall surfaces, floor surface, ceiling surface, road, railroad, bridge, tunnel, and the like), an electronic device, a transportation device (for example, vehicle such as automobile, two-wheeled vehicle, and railway, and ship).

As described above, the following matters are disclosed in the present description.
[1] A sensor package attached to an object, the sensor package including:
   a first base material; and
   an optical fiber having an FBG sensor portion disposed on the first base material, in which the sensor package includes
   a resin portion located on the first base material,
   a first adhesive layer located on the first base material to attach the first base material to the object, and
   a bonding adhesive layer located on a surface of the resin portion on a side opposite to the first base material, and
   the FBG sensor portion of the optical fiber is in contact with the resin portion and held by the bonding adhesive layer.
[2] The sensor package according to [1], in which
   the resin portion has adhesiveness.
[3] The sensor package according to [1] or [2], in which
   an elastic modulus of the resin portion is less than 1.0 × 10⁷ Pa.
[4] The sensor package according to any of [1] to [3], in which
   the bonding adhesive layer is cured at room temperature.
[5] The sensor package according to any of [1] to [4], in which
   the bonding adhesive layer is cured by a curing agent.
[6] The sensor package according to any of [1] to [5], in which
   at least a part of an entire periphery of the resin portion excluding a surface on a side of the bonding adhesive layer is covered with the first adhesive layer.
[7] The sensor package according to any of [1] to [6], in which
   the first adhesive layer has an opening penetrating in a thickness direction, and
   the resin portion is provided in the opening.
[8] The sensor package according to any of [1] to [7], in which
   surfaces of the first adhesive layer and the bonding adhesive layer on sides to be attached to the object are protected by a first release liner.
[9] The sensor package according to any of [1] to [8], in which
   the first base material is transparent or translucent.
[10] The sensor package according to any of [1] to [9], further including:
   a second adhesive layer and a second base material in this order on a surface of the first base material on a side opposite to a surface on a side of the first adhesive layer.
[11] The sensor package according to [10], in which
   the second base material is a weather resistant base material.
[12] The sensor package according to [10] or [11], further including:
   a second release liner in a portion between the first base material and the second adhesive layer.
[13] A method for attaching the sensor package according to any of [1] to [12],
   a bonding adhesive layer in the sensor package being cured by a curing agent, the method for attaching the sensor package including:
   a step of applying the curing agent to at least one of the bonding adhesive layer and an object; and
   a step of attaching the sensor package to the object via the bonding adhesive layer.
[14] A method for attaching the sensor package according to any of [1] to [12],
   a bonding adhesive layer in the sensor package being cured by a curing agent, the method for attaching the sensor package including:
   a step of applying the curing agent to the bonding adhesive layer;
   a step of applying the curing agent to an object; and
   a step of attaching the sensor package to the object such that the curing agent applied to the bonding adhesive layer and the curing agent applied to the object are in contact with each other.
[15] A method for attaching the sensor package according to any of [1] to [5] to an object, in which
   in the sensor package, surfaces of a first adhesive layer and a bonding adhesive layer on sides to be attached to the object are protected by a first release liner,
   the sensor package includes a first base material, a second adhesive layer, and a second base material in this order on a surface on a side opposite to the surface of the first adhesive layer on the side to be attached to the object, and
   the sensor package includes a second release liner in a portion between the first base material and the second adhesive layer, the method for attaching the sensor package including:
      a step of peeling off the first release liner and applying a curing agent to the bonding adhesive layer;
      a step of attaching a release surface of the sensor package from which the first release liner is peeled off to the object; and
      a step of peeling off the second release liner and attaching a release surface of the second adhesive layer from which the second release liner is peeled off to the first base material.
[16] A set including:
   the sensor package according to any of [1] to [12] and a curing agent.
[17] A bonded structure in which a sensor package and an object are bonded to each other via a cured layer, the sensor package including a first base material and an optical fiber having an FBG sensor portion disposed on the first base material, the bonded structure including:
   a resin portion located on the first base material;
   a first adhesive layer located on the first base material; and
   the cured layer located on a surface of the resin portion on a side opposite to the first base material, in which
   the first base material is attached to the object via the first adhesive layer, and
   the FBG sensor portion of the optical fiber is in contact with the resin portion and held by the cured layer.

### EXAMPLES

Hereinafter, the present invention will be described in detail with reference to examples, but the present invention is not limited to these examples.

### [Preparation of bonding adhesive layer]

69 parts by mass of a liquid bisphenol A epoxy resin (trade name "jER828", manufactured by Mitsubishi Chemical Corporation), 30 parts by mass of a solid bisphenol A epoxy resin (trade name "jER1256", manufactured by Mitsubishi Chemical Corporation), and 1 part by mass of a solid special novolac epoxy resin (trade name "jER157S70", manufactured by Mitsubishi Chemical Corporation) were mixed, and methyl ethyl ketone was added to dilute the mixture such that a concentration of the epoxy resin became 65 mass% to prepare a varnish. The varnish was applied to a release-treated surface of a release-treated polyethylene terephthalate film (trade name "Diafoil MRF #38", manufactured by Mitsubishi Plastics, Inc.) such that a thickness after drying became 50 µm, and dried by heating at 80°C for 3 minutes to obtain a bonding adhesive layer. Thereafter, the bonding adhesive layer was brought into contact with another polyethylene terephthalate film such that the bonding adhesive layer was sandwiched between the two polyethylene terephthalate films.

### [Manufacturing Example 1]

As the first adhesive layer, an adhesive layer (Hyper Joint H9004, manufactured by Nitto Denko Corporation) was cut into a size of 50 mm × 30 mm, and a center portion thereof was cut to provide an opening of 20 mm × 10 mm to prepare the first adhesive layer.

The above adhesive layer was bonded to a PET base material (Lumirror S-10 #188, manufactured by Toray Industries, Inc.) serving as a first base material cut into a size of 50 mm × 30 mm.

Two adhesive sheets (CS9918U, manufactured by Nitto Denko Corporation) were stacked, then cut into a size of 20 mm × 10 mm to prepare a resin portion, and the resin portion was fitted into the opening of the adhesive layer and laminated on the PET base material.

Further, an optical fiber with FBG sensor that is covered with a polyimide covering material having an outer diameter of 0.155 mm (outer diameter of optical fiber was 0.125 mm, and outer diameter of covering material including the optical fiber was 0.155 mm) was installed so as to be in parallel to a long side of the PET base material such that the FBG sensor was positioned on the resin portion.

A bonding adhesive layer cut into a size of 20 mm × 10 mm was bonded to the resin portion from the top of the optical fiber.

Further, a release film serving as the first release liner 18 was covered thereto to manufacture a sensor package.

### [Manufacturing Example 2]

A sensor package was manufactured in the same manner as in Manufacturing Example 1, except that the resin portion was changed to a liquid resin of silylated urethane resin (Ultraversatile SU software, manufactured by Konishi Co., Ltd.), poured into the opening of the adhesive layer, and cured at room temperature (25°C) for 24 hours.

### [Comparative Manufacturing Example 1]

As the first adhesive layer, two adhesive layers were each prepared by cutting an adhesive layer (Hyper Joint H9004, manufactured by Nitto Denko Corporation) into a size of 50 mm × 30 mm, and providing an opening of 20 mm × 10 mm at a center portion thereof.

A first adhesive layer thereof was disposed on a release film (Diafoil MRF #38, manufactured by Mitsubishi Plastics, Inc.). An optical fiber with an FBG sensor having an outer diameter of 0.155 mm was placed thereon such that the FBG sensor was positioned in the opening. Next, a second adhesive layer thereof was bonded from above. Accordingly, gaps between the optical fiber and the two adhesive layers were filled, and the FBG sensor was disposed in the openings of the two adhesive layers.

Next, a resin cured at room temperature, which is obtained by mixing an epoxy resin (jER827, manufactured by Mitsubishi Chemical Corporation) and a curing agent (IBMI12, manufactured by Mitsubishi Chemical Corporation) at a mass ratio of 100:20, was filled into the opening and cured at 80°C for 30 minutes to form a resin portion.

As a first base material, a PET base material (Lumirror S-10 #188, manufactured by Toray Industries, Inc.) was laminated on the adhesive layer to prepare a laminate.

A bonding adhesive layer was cut into a size of 20 mm × 10 mm for preparation. A release film was peeled off from the laminate, and the bonding adhesive layer was bonded to the resin portion.

Further, a release film serving as the first release liner 18 was covered thereto to manufacture a sensor package.

### [Evaluation]

### <Fixing of Optical Fiber>

A resin portion cut into a size of 20 mm × 10 mm and molded was prepared, an optical fiber having a length of 5 cm was installed from above, a release liner was placed thereon, and then the release liner was pressed using a hand roller. Thereafter, when the release liner was peeled off and turned upside down, a case where the fiber did not fall off for 1 minute was determined as having fixation, and a case where the fiber fell off was determined as having no fixation. Since the bonding adhesive layer is soft and the optical fiber is thin, the bonding adhesive layer is broken due to a pressure at the time of bonding, and thus, in the obtained sensor package, the optical fiber entered a state in which a part thereof protrudes from the bonding adhesive layer and is exposed as shown in FIG. 5.

### <Elastic Modulus of Resin Portion>

The elastic modulus of the resin portion was measured as follows. First, a sample piece having a size of 30 mm × 30 mm was cut out from an adhesive sheet having PET films subjected to a release treatment on both surfaces of an adhesive layer, one of the PET films subjected to a release treatment was peeled off, and the exposed adhesive layer was rolled into a cylindrical shape to prepare a measurement sample. Then, the prepared measurement sample was subjected to a tensile test at a distance between chucks of 10 mm and a tensile speed of 50 mm/min, and an initial tensile elastic modulus (Pa) was determined based on a slope of an initial portion (tangent line) of an obtained stress-strain curve.

An elastic modulus of a liquid resin was measured as follows. First, the liquid resin was applied onto the PET film subjected to a release treatment, further covered with another PET film subjected to a release treatment, and cured under any conditions. The PET film was peeled off from the obtained sheet, the sheet was cut into a size of 10 mm in width × 40 mm in length, subjected to a tensile test at a distance between chucks of 10 mm and a tensile speed of 50 mm/min, and the initial tensile elastic modulus (Pa) was determined based on a slope of an initial portion (tangent line) of an obtained stress-strain curve.

### <Wavelength Shift>

An interrogator Bragg METER FS22 (HBM) was connected to the FBG sensor, and a peak wavelength in a wavelength spectrum measured at a place of a constant temperature (25°C) was measured using this. An initial wavelength before processing (before manufacture) to the sensor package is denoted by (A), a wavelength after manufacture is denoted by (B), and a wavelength after 4 days from manufacture of the sensor package is denoted by (C).
Wavelength shift amount (nm) before and after manufacture = B - A
Wavelength shift amount (nm) after 4 days from manufacture = C - B

**[Table 1]**

| | Position of optical fiber | Resin portion | | | Wavelength shift amount before and after manufacture | Wavelength shift amount after 4 days from manufacture |
|---|---|---|---|---|---|---|
| | | Material | Fixation of optical fiber | Initial elastic modulus | | |
| Manufacturing Example 1 | In contact with bonding adhesive layer | Adhesive | Present | 5 × 10⁴ Pa | No change | No change |
| | | (Two laminated acrylic adhesive layers) | | | | |
| Manufacturing Example 2 | In contact with bonding adhesive layer | Liquid curable resin | Present | 4 × 10⁵ Pa | No change | No change |
| | | (Silylated urethane resin) | | | | |
| Comparative Example 1 | Embedded in resin portion | Thermosetting resin | - | 1 × 10⁹ Pa | -4.7 nm | 2.6 nm |
| | | (Epoxy resin) | | | | |

From results in Table 1, it was found that, in the sensor package according to the present invention, the wavelength shift of the peak wavelength due to the lapse of time before and after manufacture does not occur in the wavelength spectrum measured by the interrogator, and highly accurate sensing is possible. On the other hand, in the sensor package of the comparative example, since the FBG sensor is embedded in the resin portion, the wavelength shift of the peak wavelength is observed due to an influence of cure shrinkage or stress relaxation of the resin portion.

Although various embodiments have been described above with reference to the drawings, the present invention is not limited to these examples. It is apparent to those skilled in the art that various alterations or modifications can be conceived within the scope described in the claims, and it is understood that the alterations or modifications naturally fall within the technical scope of the present invention. In addition, the components described in the above embodiments may be freely combined without departing from the spirit of the invention.

The present application is based on a Japanese patent application (No. 2022-059637) filed on March 31, 2022, the contents of which are incorporated as a reference in the present application.

### REFERENCE SIGNS LIST

100, 200, 300a, 300b, 300c: sensor package
400: bonded structure
10: FBG sensor portion
11: first adhesive layer
12: resin portion
13: covering material
14: bonding adhesive layer
15: optical fiber
16: second adhesive layer
17: second base material
18: first release liner
19: second release liner
19c: tab
20: first base material
30: cured layer
40: object

## Claims

1. A sensor package attached to an object, the sensor package comprising:
a first base material; and
an optical fiber having an FBG sensor portion disposed on the first base material, wherein
the sensor package includes
a resin portion located on the first base material,
a first adhesive layer located on the first base material to attach the first base material to the object, and
a bonding adhesive layer located on a surface of the resin portion on a side opposite to the first base material, and
the FBG sensor portion of the optical fiber is in contact with the resin portion and held by the bonding adhesive layer.

2. The sensor package according to claim 1, wherein
the resin portion has adhesiveness.

3. The sensor package according to claim 1, wherein
an elastic modulus of the resin portion is less than 1.0 × 10⁷ Pa.

4. The sensor package according to claim 1, wherein
the bonding adhesive layer is cured at room temperature.

5. The sensor package according to claim 1, wherein
the bonding adhesive layer is cured by a curing agent.

6. The sensor package according to claim 1, wherein
at least a part of an entire periphery of the resin portion excluding a surface on a side of the bonding adhesive layer is covered with the first adhesive layer.

7. The sensor package according to claim 1, wherein
the first adhesive layer has an opening penetrating in a thickness direction, and
the resin portion is provided in the opening.

8. The sensor package according to claim 1, wherein
surfaces of the first adhesive layer and the bonding adhesive layer on sides to be attached to the object are protected by a first release liner.

9. The sensor package according to claim 1, wherein
the first base material is transparent or translucent.

10. The sensor package according to claim 1, further comprising:
a second adhesive layer and a second base material in this order on a surface of the first base material on a side opposite to a surface on a side of the first adhesive layer.

11. The sensor package according to claim 10, wherein
the second base material is a weather resistant base material.

12. The sensor package according to claim 10, further comprising:
a second release liner in a portion between the first base material and the second adhesive layer.

13. A method for attaching the sensor package according to any of claims 1 to 12,
a bonding adhesive layer in the sensor package being cured by a curing agent, the method for attaching the sensor package comprising:
a step of applying the curing agent to at least one of the bonding adhesive layer and an object; and
a step of attaching the sensor package to the object via the bonding adhesive layer.

14. A method for attaching the sensor package according to any of claims 1 to 12,
a bonding adhesive layer in the sensor package being cured by a curing agent, the method for attaching the sensor package comprising:
a step of applying the curing agent to the bonding adhesive layer;
a step of applying the curing agent to an object; and
a step of attaching the sensor package to the object such that the curing agent applied to the bonding adhesive layer and the curing agent applied to the object are in contact with each other.

15. A method for attaching the sensor package according to any of claims 1 to 5 to an object, wherein
in the sensor package, surfaces of a first adhesive layer and a bonding adhesive layer on sides to be attached to the object are protected by a first release liner,
the sensor package includes a first base material, a second adhesive layer, and a second base material in this order on a surface on a side opposite to the surface of the first adhesive layer on the side to be attached to the object, and
the sensor package includes a second release liner in a portion between the first base material and the second adhesive layer, the method for attaching the sensor package comprising:
a step of peeling off the first release liner and applying a curing agent to the bonding adhesive layer;
a step of attaching a release surface of the sensor package from which the first release liner is peeled off to the object; and
a step of peeling off the second release liner and attaching a release surface of the second adhesive layer from which the second release liner is peeled off to the first base material.

16. A set comprising:
the sensor package according to any of claims 1 to 12 and a curing agent.

17. A bonded structure in which a sensor package and an object are bonded to each other via a cured layer, the sensor package including a first base material and an optical fiber having an FBG sensor portion disposed on the first base material, the bonded structure comprising:
a resin portion located on the first base material;
a first adhesive layer located on the first base material; and
the cured layer located on a surface of the resin portion on a side opposite to the first base material, wherein
the first base material is attached to the object via the first adhesive layer, and
the FBG sensor portion of the optical fiber is in contact with the resin portion and held by the cured layer.
